# EUROPEAN PATENT APPLICATION

(11) **EP 2 503 384 A1**
(43) Date of publication of application: **26.09.2012**
(21) Application number: 10842231.2
(22) Date of filing: 27.12.2010
(51) Int. Cl.: G02F 1/13357, F21S 2/00, G02F 1/1335, F21Y 101/02

(54) **LIQUID CRYSTAL DISPLAY DEVICE**

(30) Priority: 08.01.2010 JP 2010003390
(71) Applicant: Sharp Kabushiki Kaisha, Osaka-shi, Osaka 545-8522 (JP)
(72) Inventor: NAKAJIMA, Nobuhisa, Osaka-shi, Osaka 545- 8522 (JP)
(74) Representative: Müller-Boré & Partner Patentanwälte
(86) International application number: PCT/JP2010/073613
(87) International publication number: WO 2011/083720

(57) **Abstract**

A liquid crystal display device (100) of the present invention includes a liquid crystal panel (10) and a side light unit (20) for emitting light from a position lateral to the panel (10). The panel (10) includes a front substrate (1), a back substrate (2), and a light-scattering liquid crystal layer (3). The unit (20) includes a light source (7) in a position lateral to the panel (10), and a light guide (6) having a light exit surface (6b) via which light, emitted from the light source (7) and entering the light guide (6), is emitted toward an end surface (1a) of the substrate (1). The surface (6b) is inclined with respect to a direction vertical to a front surface (1b) of the substrate (1) so as to face a back surface side of the panel (10). Accordingly, generation of a bright line(s) can be prevented in the panel (10).

## Description

### Technical Field

The present invention relates to a reflective liquid crystal display device including a side light.

### Background Art

A liquid crystal display device has been applied to not only a large-screen television but also a small-screen display device, such as a display section of a mobile phone. Examples of such a small-screen liquid crystal display device encompass a reflective liquid crystal display device including a reflective liquid crystal panel.

The reflective liquid crystal display device displays an image by using ambient light. For this reason, in order to allow a display screen of the reflective crystal display device to be visible in a dark place where the reflective crystal display device cannot receive external light, it is necessary for the reflective liquid crystal display device to include a light source for emitting light into a liquid crystal panel. Conventionally, there has been an arrangement in which a front light unit constituted by a light source and a light guide is provided on a liquid crystal panel of a liquid crystal display device.

Meanwhile, in recent years, a reduction in a thickness of a liquid crystal display device has been required. For example, a mobile device (such as a mobile phone) having a thin body has been developed. With such development of the mobile device, a liquid crystal display device to be provided on the mobile device has been required to have a thin body.

In view of this, in order to cause a reflective liquid crystal display device to have a reduction in thickness, there has been proposed a side light-type (edge light-type) liquid crystal display device in which a light source is provided in a position lateral to a liquid crystal panel (see Patent Literatures 1 and 2, for example). Such a side light-type liquid crystal display device has an arrangement in which (i) a liquid crystal layer of a liquid crystal panel is supported by a pair of substrates so as to be between the pair of substrates, (ii) each of the pair of substrates is a transparent substrate, and (iii) a light source is provided in a position lateral to the liquid crystal panel. With the arrangement, it is possible to cause a liquid crystal display device to have a smaller thickness, as compared with a conventional arrangement in which a front light unit is provided.

The following description briefly deals with a liquid crystal display device disclosed in Patent Literature 1 and another liquid crystal display device disclosed in Patent Literature 2.

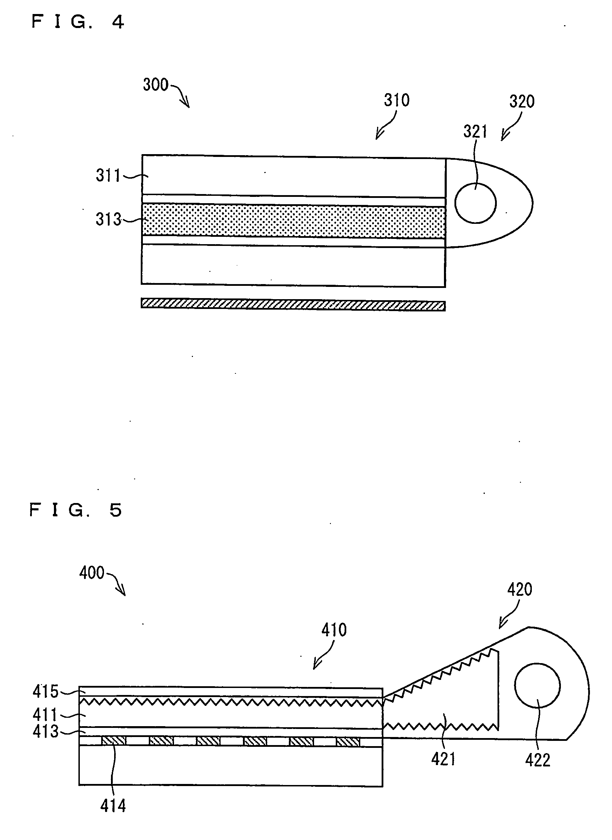

Fig. 4 is a view schematically illustrating a liquid crystal display device 300 disclosed in Patent Literature 1. The liquid crystal display device 300 includes a liquid crystal panel 310, and a side light unit 320 provided in a position lateral to the liquid crystal panel 310. Light emitted from a fluorescent tube 321 of the side light unit 320 enters a glass substrate 311 of the liquid crystal panel 310. The liquid crystal display device 300 displays an image by use of the light.

Further, the liquid crystal panel 310 of the liquid crystal display device 300 includes a light-scattering liquid crystal layer 313. The light-scattering liquid crystal layer 313 has such a characteristic that whether the light-scattering liquid crystal layer 313 is in a light-transmission state or a light-scattering state optically can be controlled by adjusting a voltage applied to the light-scattering liquid crystal layer 313. With the liquid crystal display device 300 having such an arrangement, it is possible to improve use efficiency of light without employing a polarizer.

Fig. 5 is a view schematically illustrating a liquid crystal display device 400 disclosed in Patent Literature 2. The liquid crystal display device 400 includes a liquid crystal panel 410, and a side light unit 420 provided in a position lateral to the liquid crystal panel 410. The side light unit 420 includes a light guide 421 and a fluorescent tube 422. Light emitted from the florescent tube 422 travels inside a light guide 411, so as to enter a glass substrate 411 of the liquid crystal panel 410.

The light entering the glass substrate 411 of the liquid crystal panel 410 (i) is transmitted through a liquid crystal layer 413, (ii) is subjected to diffuse reflection on a diffuse reflectance electrode 414, and then (iii) is transmitted through the liquid crystal layer 413 again. In the liquid crystal layer 413, the light is modulated, so that light having a specific polarization component is transmitted through a polarizer 415. The liquid crystal display device 400 thus displays an image.

### Citation List

### Patent Literature

Patent Literature 1
   Japanese Patent Application Publication, Tokukaihei, No.10-186361 A (Publication Date: July 14, 1998)
Patent Literature 2
   Japanese Patent Application Publication, Tokukai, No. 2001-166296 A (Publication Date: June 22, 2001)

### Summary of Invention

### Technical Problem

The reflective liquid crystal display device employing a side light, disclosed in Patent Literature 1, and the reflective liquid crystal display device employing a side light, disclosed in Patent Literature 2, have different arrangements. Among these, the arrangement in which light-scattering liquid crystal is used, disclosed in Patent Literature 1, has been highly expected as a liquid crystal display device that can display an image with a high contrast ratio without employing a polarizer.

However, the inventors of the present invention have found that a reflective liquid crystal display device which includes a side light and employs light-scattering liquid crystal has a problem in display quality in a case where the reflective liquid crystal display device has a thin and small body.

That is, the liquid crystal panel employing the light-scattering liquid crystal does not use a polarizer. For this reason, there is a case where a part of light emitted from the light source does not reach the liquid crystal layer but is emitted to the outside directly via the glass substrate. Particularly, in a case where the liquid crystal display device has a thin body, the glass substrate of the liquid crystal display device has a small thickness. In this case, a large part of light emitted from the light source is emitted to the outside directly via the glass substrate. The light directly emitted to the outside is displayed as a bright line(s) of the liquid crystal panel. This reduces display quality of the liquid crystal panel.

Generation of such a bright line(s) of the liquid crystal panel may be prevented by a method in which (i) an end part of the glass substrate is made large, and (ii) a light-blocking member is provided on the end part. However, this method generates an unnecessary space in the liquid crystal display device. This is a disadvantage in causing the liquid crystal display device to have a reduction in thickness and a reduction in size.

The present invention is made in view of the problems. An object of the present invention is to provide a light-scattering liquid crystal display device which (i) is excellent in display quality and (ii) can have a reduction in thickness and a reduction in size.

### Solution to Problem

In order to attain the object, a liquid crystal display device of the present invention, which is of a reflective type, includes: a liquid crystal panel; and a side light unit for emitting light toward the liquid crystal panel from a position lateral to the liquid crystal panel, the liquid crystal panel including: a front substrate; a back substrate provided to face the front substrate; and a light-scattering liquid crystal layer supported by the front substrate and the back substrate so as to be between the front substrate and the back substrate, the side light unit including: a light source provided in a position lateral to the liquid crystal panel; and a light guide provided between the liquid crystal panel and the light source, the light guide having a light exit surface via which light entering the light guide from the light source is emitted toward an end surface of the front substrate, at least a part of the light exit surface, facing the end surface of the front substrate, being inclined with respect to a direction vertical to a front surface of the liquid crystal panel so as to face a back surface side of the liquid crystal panel.

With the arrangement, the light emitted from the light source enters the front substrate via the light guide, and is scattered in the liquid crystal layer or is transmitted through the liquid crystal layer. The liquid crystal display device thus displays an image.

Here, the light guide is such that at least a part of the light exit surface of the light guide, facing the end surface of the front substrate, is inclined with respect to the direction vertical to the front surface of the liquid crystal panel so as to face the back surface side of the liquid crystal panel. With the arrangement, the light emitted from the light exit surface of the light guide thus inclined is refracted toward the backs surface side of the liquid crystal panel, and then enters the end surface of the front substrate.

Accordingly, with the arrangement, it is possible to (i) reduce light which does not reach the liquid crystal layer but is directly emitted to the outside from the front substrate, and therefore (ii) improve display quality of the liquid crystal panel. Further, since the display quality can be improved without employing a light-blocking member or the like, it is possible to provide a light-scattering liquid crystal display device which can have a reduction in thickness and a reduction in size.

Additional objects, features, and strengths of the present invention will be made clear by the description below. Further, the advantages of the present invention will be evident from the following explanation in reference to the drawings.

### Advantageous Effects of Invention

A liquid crystal display device of the present invention, which is of a reflective type, includes: a liquid crystal panel; and a side light unit for emitting light toward the liquid crystal panel from a position lateral to the liquid crystal panel, the liquid crystal panel including: a front substrate; a back substrate provided to face the front substrate; and a light-scattering liquid crystal layer supported by the front substrate and the back substrate so as to be between the front substrate and the back substrate, the side light unit including: a light source provided in a position lateral to the liquid crystal panel; and a light guide provided between the liquid crystal panel and the light source, the light guide having a light exit surface via which light entering the light guide from the light source is emitted toward an end surface of the front substrate, at least a part of the light exit surface, facing the end surface of the front substrate, being inclined with respect to a direction vertical to a front surface of the liquid crystal panel so as to face a back surface side of the liquid crystal panel. Accordingly, it is possible to provide a light-scattering liquid crystal display device which (i) is excellent in display quality and (ii) can have a reduction in thickness and a reduction in size.

### Brief Description of Drawings

Fig. 1(a)

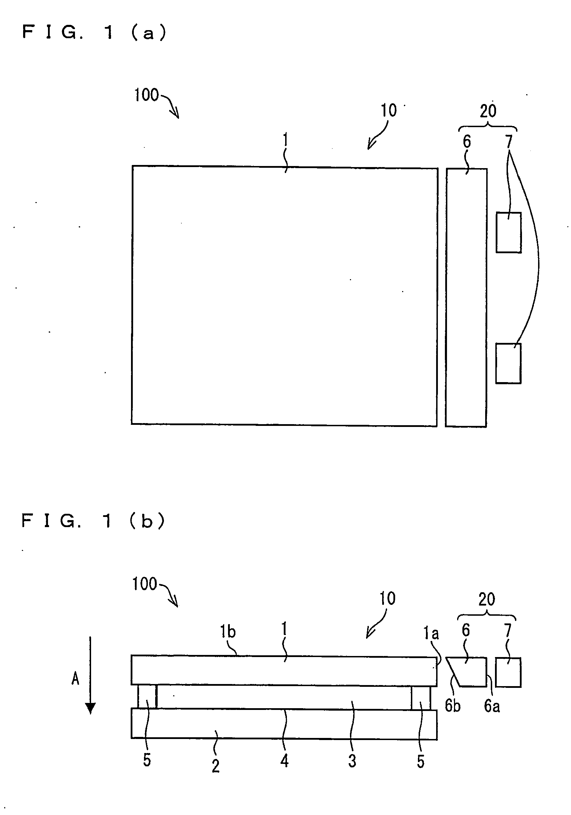

   Fig. 1(a) is a top view illustrating an arrangement of a liquid crystal display device in accordance with an embodiment of the present invention.
Fig. 1(b)
   Fig. 1(b) is a cross-sectional view illustrating the arrangement of the liquid crystal display device in accordance with the embodiment of the present invention.
Fig. 2

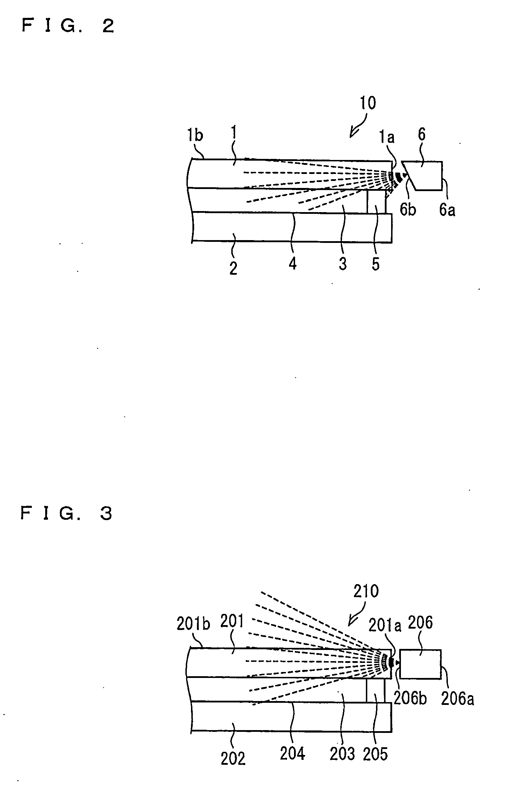

   Fig. 2 is a cross-sectional view schematically illustrating how light emitted from a light guide travels in the liquid crystal display device.
Fig. 3
   Fig. 3 is a cross-sectional view schematically illustrating how light emitted from a light guide travels in a liquid crystal display device of a comparison example.
Fig. 4
   Fig. 4 is a view schematically illustrating a conventional liquid crystal display device.
Fig. 5
   Fig. 5 is a view schematically illustrating another conventional liquid crystal display device.

### Description of Embodiments

One embodiment of a liquid crystal display device of the present invention is described below with reference to drawings. Note, however, that the present invention is not limited to the following embodiment.

### (Arrangement of liquid crystal display device 100)

The following description deals with a schematic arrangement of a liquid crystal display device 100 with reference to Figs. 1(a) and 1(b). Fig. 1(a) is a top view schematically illustrating the liquid crystal display device 100 of the present embodiment. Fig. 1(b) is a cross sectional view illustrating the liquid crystal display device 100 of the present embodiment.

The liquid crystal display device 100 is a reflective liquid crystal display device including a liquid crystal panel 10 and a side light unit provided in a position lateral to the liquid crystal panel 10.

First, the liquid crystal panel 10 includes (i) a front substrate 1, (ii) a back substrate 2 which is provided to face the front substrate, (iii) a liquid crystal layer provided between the front substrate 1 and the back substrate 2, and (iv) a reflective layer 4.

The front substrate 1 and the back substrate 2 have a rectangular solid shape, and are made from a transparent material such as glass and a polymer film. The front substrate 1 is provided on a viewer side, whereas the back substrate 2 is provided a side opposite to the viewer side. The front substrate 1 has a thickness of 0.2 mm, for example. The back substrate 2 has a thickness of 0.3 mm, for example.

Further, an electrode, a line, an insulating layer, and/or a semiconductor layer (each of which is not illustrated) are provided, if necessary, both (i) on a surface of the front substrate 1, which surface faces the liquid crystal layer 3, and (ii) on a surface of the back substrate 2, which surface faces the liquid crystal layer 3. For example, the front substrate 1 is a part of an active matrix substrate, and the back substrate 2 is a part of a counter substrate.

The liquid crystal layer 3 is provided and sealed in a space between the front substrate 1 and the back substrate 2, and an outer periphery part of the liquid crystal layer 3 is sealed by a seal 5. Here, the liquid crystal layer 3 is a light-scattering liquid crystal layer which can be switched between a light-transmission state and a light-scattering state. The switching between these states can be carried out by an external stimulus, such as application of a voltage.

The reflective layer 4 is a layer for causing incident light to be subjected to specular reflection. The reflective layer 4 is provided between a lower substrate 2 and the liquid crystal layer 3. The reflective layer is made from a metal, for example. A position of the reflective layer 4 is not limited to the position illustrated in Fig. 1, as long as the reflective layer 4 is provided closer to the lower substrate 2 than the liquid crystal layer 3 is.

Next, the side light unit 20 includes a light source 7 and a light guide 6. Note that the light source 7 and the light guide 6 can be attached to the liquid crystal panel 10 by use of a frame (not illustrated).

The light source 7 is provided in a position lateral to the liquid crystal panel 10. The light source 7 emits light toward an end surface 1a of the front substrate 1. According to the present embodiment, a light emitting diode (LED) is used as the light source 7. The LED has a thickness of 0.4 mm, for example.

In Fig. 1, two light sources 7 are provided, as an example. Note, however, that the number of the light sources 7 is not particularly limited. Further, the light source 7 is not limited to an LED, and may be a fluorescent tube, for example.

The light guide 6 is provided between the liquid crystal panel 10 and the light source 7. The light guide 6 leads the light emitted from the light source 7 toward the end surface 1a of the front substrate 1. The light guide 6 has a thin plate shape, and can be formed by causing polycarbonate to be subjected to injection molding, for example. Further, although details of the light guide 6 will be described later, the light guide 6 has a light exit surface 6b which is inclined toward a side facing the end surface 1a of the front substrate 1.

It is preferable that the light emitted from the light source 7 has directivity to a certain degree. In fact, however, the light emitted from the light source 7 contains a component which travels in a direction that is slightly different from a traveling direction indicating a peak of luminance. In the following descriptions, a traveling direction indicating the peak of luminance of the light emitted from the light source 7 is referred to as "peak direction". According to the present embodiment, the light guide 6 and the front substrate 1 are provided in the peak direction of the light emitted from the light source 7.

In the liquid crystal display device 100 having such an arrangement, the light emitted from the light source 7 enters the end surface 1a of the front substrate 1 via the light guide 6. The light entering the end surface 1a travels through the front substrate 1 so as to reach the liquid crystal layer 3. Here, in a case where a low voltage is applied to the liquid crystal layer 3, white display is carried out in such a manner that the light is scattered in the liquid crystal layer 3. On the other hand, in a case where a predetermined voltage is applied to the liquid crystal layer 3, black display is carried out in such a manner that the light is not scattered in the liquid crystal layer 3 but subjected to specular reflection on the liquid crystal layer 3.

The liquid crystal display device 100 includes such a light-scattering liquid crystal layer 3. With the arrangement, the liquid crystal display device 100 can have, without employing a polarizer, sufficient luminance even if strength of the light emitted from the side light unit is relatively low. It is therefore possible to have a reduction in power consumption. Further, since the liquid crystal display device 100 employs a side light, it is easy to cause the liquid crystal display device 100 to have a reduction in thickness.

Note that, in order to- reduce light that does not reach the liquid crystal layer 3 but a viewer directly (what is called leaked light), a light-blocking member may be provided on a top end part of the front substrate 1 and/or on a front surface of the light guide 6, for example.

### (Arrangement of light guide 6)

The following description deals with details of an arrangement of the light guide 6.

As illustrated in Fig. 1(b), the light guide 6 has a light incident surface 6a facing the light source 7, and a light exit surface (inclined surface) 6b facing the end surface 1a of the front substrate 1. Note that an end surface of the front substrate 1, facing the light guide 6, is referred to as "end surface 1a", and a surface of the front substrate 1 (liquid crystal panel 10), facing a viewer side, is referred to as "front surface 1b".

The light emitted from the light source 7 enters the light incident surface 6a of the light guide 6, and travels inside the light guide 6. The light traveling inside the light guide 6 reaches the light exit surface 6b, and is emitted from the light exit surface 6b toward the end surface 1a of the front substrate 1.

Here, a direction, which is (i) vertical to the front surface 1b of the front substrate 1 and (ii) is directed toward a back surface side (opposite to the viewer side) of the liquid crystal panel 10 from a front surface side (the viewer side) of the liquid crystal panel 10, is referred to as "direction A". According to the present embodiment, the end surface 1a extends in parallel with the direction A.

The light incident surface 6a of the light guide 6 is not particularly limited, as long as the light incident surface 6a extends in parallel with the direction A. Meanwhile, the light exit surface 6b of the light guide 6 is inclined with respect to the end surface 1b (direction A) of the front substrate 1 so as to face the back surface side (opposite to the viewer side). In other words, the light exit surface 6b is inclined with respect to the end surface 1b of the front substrate 1 so as to be farther away from the end surface 1b as the light exit surface 6b extends along the direction A.

How the light emitted from the light guide 6 having such an arrangement travels is explained below, by use of a comparative example, with reference to Figs. 2 and 3. Fig. 2 is a cross-sectional view schematically illustrating how the light emitted from the light guide 6 travels in the liquid crystal display device 100. Fig. 3 is a cross-sectional view schematically illustrating how light emitted from a light guide travels in a liquid crystal display device of a comparative example.

Note that the liquid crystal display device of the comparative example includes a liquid crystal panel 210 and a side light unit (not illustrated except for a light guide 206). The liquid crystal panel 210 includes a front substrate 201, a back substrate 202, a liquid crystal layer 203, a reflective layer 204, and a seal 205, in the same manner as the liquid crystal display device 100 of the present embodiment. Meanwhile, the light guide 206 of the side light unit has a shape different from that of the light guide 6 of the present embodiment. Specifically, the light guide 206 is different from the light guide 6 in that a light exit surface 206b of the light guide 206 is parallel to an end surface 20 1 a of the front substrate 201.

As described above, the light emitted form the light source generally contains a component which travels in a direction different from the peak direction. In Fig. 2, directions in which the light emitted from a center part (in a thickness direction) of the light exit surface 6b of the light guide 6 are shown. In Fig. 3, directions in which the light emitted from a center part (in a thickness direction) of the light exit surface 206b of the light guide 206 are shown.

According to the comparative example, the light emitted from the light guide 206 spreads in a radial pattern whose center is a direction parallel to the front surface 201 b of the front substrate 201 (see Fig. 3). Here, the liquid crystal panel 210 has no polarizer in the same manner as the liquid crystal panel 10. For this reason, among the light emitted from the light guide 206, a part of light, emitted toward a front surface 201b side is emitted from the front surface 201b directly to the outside. Due to the light directly emitted to the outside, a bright line(s) is generated in the liquid crystal panel 210. This reduces display quality of the liquid crystal panel 210.

On the other hand, the light exit surface 6b of the light guide 6 of the present embodiment is inclined at a certain angle with respect to the end surface 1a so as to face the back surface side (see Fig. 2). For this reason, the light traveling inside the light guide 6 is refracted in the light exit surface 6b, and then is emitted toward the back surface side more greatly than the light of the comparative example, shown in Fig. 3. This prevents the light from being emitted to the outside directly via the front surface 1b of the front substrate 1. It is therefore possible to improve the display quality of the liquid crystal panel 10.

An angle at which the light exit surface 6b is inclined with respect to the end surface 1a can be determined appropriately in consideration of a design of the liquid crystal display device 100, a refraction index of the light guide 6, etc. For example, according to the present embodiment, it is preferable that an angle at which the light exit surface 6b is inclined with respect to the end surface 1a of the front substrate 1 is in a range of 20° to 30°.

In Fig. 1, the front substrate 1 has a thickness which is substantially identical with these of the light guide 6 and the light source 7. Note, however, that the front substrate 1 can have a smaller thickness than these of the light guide 6 and the light source 7. For example, in a case where the front substrate 1 has a smaller thickness than that of the light source 7, it is preferable that the light guide 6 has a greater thickness on an incident surface 6a side than a light exit surface 6b side in view of use efficiency of the light emitted from the light source.

Further, all of the light exit surface 6b of the light guide 6 is not necessarily inclined. That is, it is also possible to achieve effects of the present invention with such an arrangement that at least a part of the light exit surface 6b of the light guide 6, facing the end surface 1a of the front substrate 1 in the liquid crystal panel 10, is inclined as described above.

According to the liquid crystal display device 100 described above, it is possible to improve display quality of the liquid crystal panel 10 without providing a light-blocking member or the like. It is therefore possible to provide a liquid crystal display device which can suitably have a reduction in thickness and a reduction in size.

The present invention is not limited to the description of the embodiments above, but may be altered by a skilled person within the scope of the claims. An embodiment based on a proper combination of technical means disclosed in different embodiments is encompassed in the technical scope of the present invention. That is, the embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### (Conclusion of the present invention)

As described above, a liquid crystal display device of the present invention, which is of a reflective type, includes: a liquid crystal panel; and a side light unit for emitting light toward the liquid crystal panel from a position lateral to the liquid crystal panel, the liquid crystal panel including: a front substrate; a back substrate provided to face the front substrate; and a light-scattering liquid crystal layer supported by the front substrate and the back substrate so as to be between the front substrate and the back substrate, the side light unit including: a light source provided in a position lateral to the liquid crystal panel; and a light guide provided between the liquid crystal panel and the light source, the light guide having a light exit surface via which light entering the light guide from the light source is emitted toward an end surface of the front substrate, at least a part of the light exit surface, facing the end surface of the front substrate, being inclined with respect to a direction vertical to a front surface of the liquid crystal panel so as to face a back surface side of the liquid crystal panel.

With the arrangement, the light emitted from the light source enters the front substrate of the liquid crystal panel via the light guide, and is scattered in the liquid crystal layer or is transmitted through the liquid crystal layer. The liquid crystal display device thus displays an image.

Here, the light guide is such that at least a part of the light exit surface, facing the end surface of the front substrate, is inclined with respect to the direction vertical to the front surface of the liquid crystal panel so as to face the back surface side of the liquid crystal panel. For this reason, the light emitted from the light exit surface of the light guide thus inclined is refracted toward the back surface side of the liquid crystal panel, and then enters the end surface of the front substrate.

Accordingly, with the arrangement described above, it is possible to (i) reduce light which does not reach the liquid crystal layer but is directly emitted to the outside via the front substrate, and therefore (ii) improve display quality of the liquid crystal panel. Further, since the display quality can be improved without employing a light-blocking member or the like, it is possible to provide a light-scattering liquid crystal display device which can have a reduction in thickness and a reduction in size.

Moreover, the liquid crystal display device of the present invention is preferably arranged such that all the light exit surface is inclined with respect to the direction vertical to the front substrate so as to face the back surface side of the liquid crystal panel.

With the arrangement, it is possible to manufacture the light guide easily by carrying out injection molding or the like.

Further, the liquid crystal display device of the present invention is preferably arranged such that the light source is a light-emitting diode.

The light-emitting diode is relatively high in directivity and has a small thickness. Accordingly, with the arrangement, it is possible to provide, more suitably, a light-scattering liquid crystal display device which (i) is excellent in display quality and (ii) can have a reduction in thickness and a reduction in size.

### Industrial Applicability

The present invention is widely applicable as a liquid crystal display device which can have a reduction in thickness and a reduction in size.

### Reference Signs List

1: Front substrate
1a: End surface
1b: Front surface
2: Back substrate
3: Liquid crystal layer
4: Reflective layer
6: Light guide
6a: Light incident surface
6b: Light exit surface
7: Light source
10: Liquid crystal panel
20: Side light unit
100: Liquid crystal display device

## Claims

1. quid crystal display device A liquid crystal display device which is of a reflective type, comprising:
a liquid crystal panel; and
a side light unit for emitting light toward the liquid crystal panel from a position lateral to the liquid crystal panel,
the liquid crystal panel including:
a front substrate;
a back substrate provided to face the front substrate; and
a light-scattering liquid crystal layer supported by the front substrate and the back substrate so as to be between the front substrate and the back substrate,
the side light unit including:
a light source provided in a position lateral to the liquid crystal panel; and
a light guide provided between the liquid crystal panel and the light source, the light guide having a light exit surface via which light entering the light guide from the light source is emitted toward an end surface of the front substrate,
at least a part of the light exit surface, facing the end surface of the front substrate, being inclined with respect to a direction vertical to a front substrate of the liquid crystal panel so as to face a back surface side of the liquid crystal panel.

2. crystal panel. The liquid crystal display device as set forth in claim 1, wherein:
all the light exit surface is inclined with respect to the direction vertical to the front substrate so as to face the back surface side of the liquid crystal panel.

3. k surface side of the liquid crystal panel. The liquid crystal display device as set forth in claim 1 or 2, wherein:
the light source is a light-emitting diode.
